# EUROPÄISCHE PATENTANMELDUNG

(11) **EP 0 881 026 A2**
(43) Veröffentlichungstag der Anmeldung: **02.12.1998**
(21) Anmeldenummer: 98109068.1
(22) Anmeldetag: 19.05.1998
(51) Int. Cl.: B23K 26/08, A24C 5/60

(54) **Verfahren zum Bearbeiten eines Streifens und Anordnung in einer Filteransetzmaschine**

(30) Priorität: 30.05.1997 DE 19722799
(71) Anmelder: Hauni Maschinenbau Aktiengesellschaft, 21033 Hamburg (DE)
(72) Erfinder: Voss, Helmut, 25551 Lokstedt (DE); Dombek, Manfred, 21521 Dassendorf (DE)

(57) **Zusammenfassung**

Beschrieben wird ein Verfahren und eine Anordnung zum Bearbeiten eines Streifens, von dem Abschnitte zum Verbinden von Zigaretten und Filterstopfen mittels Laserstrahlen abgetrennt werden. Das Ziel ist, den Abtrenn- und gegebenenfalls einen zusätzlichen Perforiervorgang zu verbessern.
Die Lösung besteht darin, die Abschnitte mittels kurzzeitiger Laserblitze von dem Streifen abzutrennen.

Der Vorteil ist darin zu sehen, daß das Abtrennen von Abschnitten ohne mechanische Schneideinrichtungen oder optische Nachführeinrichtungen für einen Laserstrahl bewirkt werden kann, wobei gleichzeitig auch die Bildung eines Perforationsmusters möglich ist.

## Beschreibung

Die Erfindung betrifft ein Verfahren zum Bearbeiten eines Streifens, von dem Abschnitte zum Verbinden von Zigaretten und Filterstopfen mittels Laserstrahlen abgetrennt werden. Die Erfindung betrifft außerdem eine Anordnung in einer Filteransetzmaschine zum Abtrennen von Abschnitten zum Verbinden von Zigaretten oder Filterstopfen von einem Streifen mittels eines Lasers.

Bei der Herstellung von Filterzigaretten werden von beleimten Streifen Abschnitte (Blättchen) abgetrennt, die jeweils um einen Filterstopfen und das Ende einer Zigarette gewickelt werden, um diese beiden Bestandteile einer Filterzigarette zu verbinden. Derartig hergestellt Filterzigaretten werden häufig im Filterbereich perforiert, d. h. mit kleinen Löchern versehen, durch die beim Ziehen an den Zigaretten von außen Luft in das Innere der Filter strömt. Die Perforationen können auf einen Streifen aufgebracht werden, bevor die Blättchen abgetrennt werden. Eine derartige Anordnung ist in der US-PS 4 281 670 beschrieben.
Es ist durch die DE-OS 41 22 273 bereits bekannt, Verbindungsblättchen mittels eines von einem Laser abgegebenen Laserteilstrahls von einem bewegten Streifen abzutrennen. Ein weiterer Teilstrahl desselben Lasers wird dazu benutzt, die Filterenden fertiger Zigaretten zu perforieren. Hierzu muß der Laserstrahl aufgeteilt werden. Der zum Abtrennen verwendete kontinuierliche Laserteilstrahl muß mittels eines rotierenden Polygonspiegels dem bewegten Streifen nachgeführt werden, um den Trennschnitt zu bewirken. Der zum Perforieren verwendete ebenfalls kontinuierliche Teilstrahl muß zum Auslaßbereich einer Maschine zum Ansetzen von Filterstopfen geführt werden und dort in Perforationsimpulse umgewandelt werden. Beide Teilaufgaben erfordern erheblichen mechanischen, optischen und steuerungstechnischen Aufwand.
Die der Erfindung zugrundeliegende Aufgabe besteht darin, von einem Streifen der eingangs genannten Art Abschnitte ohne nachgeführten Laserstrahl abtrennen zu können. Gemäß einer Zusatzaufgabe soll zusätzlich eine Perforation des Streifens mit vorgegebenem Perforationsmuster möglich sein.

Die Aufgabe wird nach dem Verfahren gemäß der Erfindung dadurch gelöst, daß die Abschnitte mittels kurzzeitiger Laserblitze von dem Streifen abgetrennt werden.
Die Lösung der Zusatzaufgabe erfolgt nach einer Weiterbildung der Erfindung dadurch, daß der Streifen oder die Abschnitte zum Bilden von Ventilationsmustern mittels Laserblitzen perforiert werden.

Weitere Ausgestaltungen der Erfindung sind den untergeordneten Verfahrensansprüchen zu entnehmen.

Die eingangs genannte Anordnung ist gekennzeichnet durch einen kurzzeitige Laserblitze abgebenden Laser zum Bilden von Trennlinien.
Die Lösung der zusätzlichen Aufgabe besteht in einem Laser zum Bilden von Ventilationsperforationen mittels Laserblitzen.

Weiterbildungen und weitere Ausgestaltungen der Anordnung gemäß der Erfindung sind den untergeordneten Anordnungsansprüchen zu entnehmen.

Die Erfindung weist den besonderen Vorteil auf, daß eine Führung eines Laserstrahls entlang einer Trennlinie nicht erforderlich ist, die hierzu nötigen teuren, empfindlichen und störanfälligen Einrichtungen wie schnelldrehende Polygonspiegel und Steuerungen also entfallen können. Außerdem ist es möglich, sämtliche Perforationen eines Perforationsmusters gleichzeitig in einen bewegten Streifen einzubringen, besonders vorteilhaft mit dem Laserblitz, der auch die Trennlinien einbringt.

Die Erfindung wird anhand eines Ausführungsbeispieles näher erläutert.

Es zeigen:
- Figur 1: eine Filteransetzmaschine vom Typ MAX der *Hauni Maschinenbau AG* mit einer mit einem Laser arbeitenden Trennanordnung und einer Laserperforationsanordnung,
- Figur 2: Einzelheiten der Trenn- und Perforationsanordnung.

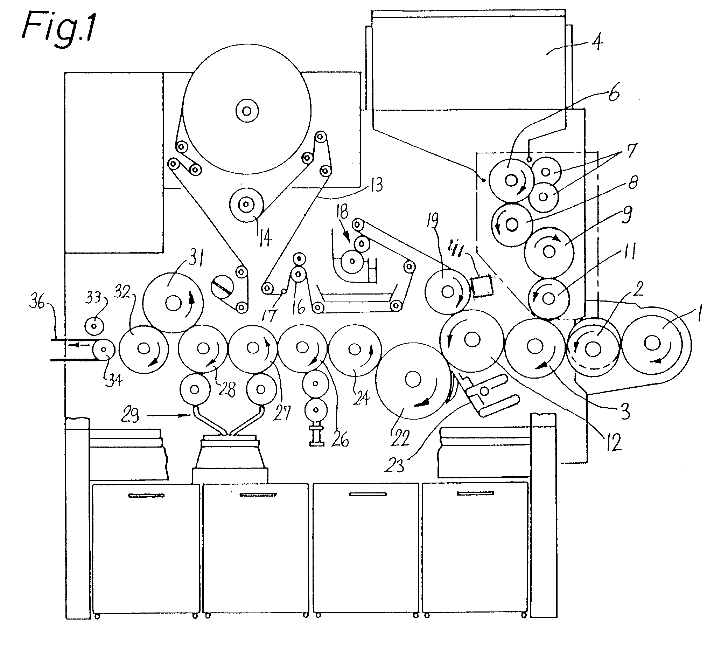

Die durch die US-PS 4 281 670 bekannte Filteransetzmaschine gemäß Figur 1 weist folgende Einzelheiten auf:
Eine Einlauftrommel 1 übergibt die auf einer Zigarettenherstellmaschine produzierten Zigaretten an zwei Staffeltrommeln 2, welche die gestaffelt zugeführten Zigaretten entstaffeln und in Reihen zu je zwei Stück mit einem Zwischenraum zwischen den Zigaretten an eine Zusammenstelltrommel 3 abgeben. Die Filterstäbe gelangen aus einem Magazin 4 auf eine Schneidtrommel 6, werden von zwei Kreismessern 7 zu Filterstopfen doppelter Gebrauchslänge geschnitten, auf einer Staffeltrommel 8 gestaffelt, von einer Schiebetrommel 9 zu einer Reihe hintereinanderliegender Stopfen ausgerichtet und von einer Beschleunigertrommel 11 in die Zwischenräume der Zigarettenreihen auf der Zusammenstelltrommel 3 abgelegt. Die Zigarette-Filter-Zigarette-Gruppen werden zusammengeschoben, so daß sie axial dicht an dicht liegen. Anschließend werden sie von einer Übergabetrommel 12 übernommen.

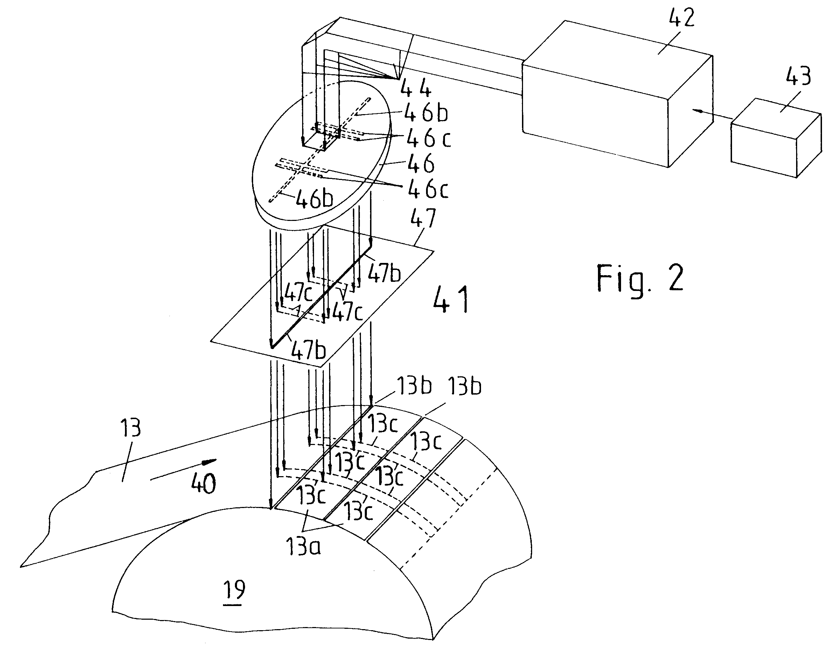

Ein Verbindungspapierstreifen 13 wird von einer Bobine 14 mittels Abzugswalzen 16 abgezogen. Der Streifen 13 wird um einen eine scharfe Kante aufweisenden Vorbrecher 17 herumgelenkt, von eine Beleimvorrichtung 18 beleimt und geschnitten. Die abgetrennten Verbindungsblättchen (Abschnitte) werden an die Zigaretten-Filter-Gruppen auf der Übergabetrommel 12 angeheftet und auf einer Rolltrommel 22 mittels einer Rollhand 23 um die Zigaretten-Filter-Gruppen herumgerollt. Die fertigen Gruppen Doppelfilterzigaretten werden über eine Trockentrommel 24 einer Schneidtrommel 26 zugeführt und auf dieser durch mittiges Schneiden durch die Filterstopfen hindurch zu Einzelfilterzigaretten konfektioniert, wobei gleichzeitig fehlerhafte Filterzigaretten ausgeworfen werden. Eine mit einer Übergabetrommel 27 und einer Sammeltrommel 28 zusammenwirkende Wendeeinrichtung 29 wendet eine Filterzigarettenreihe und überführt sie gleichzeitig in die über die Übergabetrommel 27 und die Sammeltrommel 28 durchlaufende ungewendete Filterzigarettenreihe. Über eine Prüftrommel 31 gelangen die Filterzigaretten zu einer Auswerftrommel 32, auf welcher vor dem Auswerfvorgang außerdem die Kopfabtastung der Filterzigaretten erfolgt. Eine mit einer Bremstrommel 33 zusammenwirkende Ablegertrommel 34 legt die Filterzigaretten auf ein Ablegerband 36. Mit 41 ist eine Trenn- und Perforieranordnung bezeichnet, von der Figur 2 Einzelheiten zeigt.

In Figur 2 ist mit 13 wieder der Streifen aus beleimtem Verbindungspapier bezeichnet, von dem im Bereich der Trommel 19 Verbindungsblättchen 13a abgetrennt werden. Mit 13b sind die quer zur Förderrichtung 40 des Streifens 13 eingebrachten Trennlinien bezeichnet. Außerdem werden in diesem Bereich Perforationen 13c eingebracht, die in Förderrichtung 40 verlaufen. Die Perforationen 13c erstrecken sich vorteilhaft von Trennlinie 13b zu Trennlinie 13b, so daß sie in den Filterbereichen der fertigen Filterzigaretten zwei ringförmige Perforationsspuren ergeben, durch die Nebenluft von außen in das Filterinnere strömen kann. Die Schneid- und Perforationsanordnung 41 weist einen sogenannten TEA-Laser 42 auf, wie er von der Firma *LUMONICS GmbH, Junkersstraße 5, D-82178 Puchheim, DE,* unter der Typenbezeichnung *IMPACT 3000* vertrieben wird. Es handelt sich dabei um CO₂-Laser, die extrem kurze Laserblitze von ca. 1 Mikrosekunde Dauer und sehr hohem Energieinhalt aussenden können. Gesteuert wird der Laser 42 von einem Steuergerät 43, das Steuersignale in Abhängigkeit von der Antriebsdrehzahl der in Figur 1 dargestellten Filteransetzmaschine an den Laser zu den Zeitpunkten abgibt, an denen Trennlinien 13b und Perforationen 13c in dem Streifen 13 gebildet werden sollen.
Der mit 44 angedeutete Strahlengang der Laserblitze gelang! zu einer sogenannten defraktiv fokussierenden Linse 46 (diffractive focusing lens), wie sie etwa von der Firma *Coherent, Inc., 2301 Lindbergh Street, Aubum, Calif. 95602, USA,* vertrieben wird. Defraktive Linsen können optisch so ausgelegt werden, daß sie konzentrierte Strahlengänge linienförmig in jeder gewünschten Richtung verbreitern. Die Linse 46 ist so ausgelegt, daß sie die Lichtblitze 44 in eine Linie 46b (entsprechend den Trennlinien 13b) und vier Linien senkrecht dazu (entsprechend den Perforationen 13c) umformen. Zwischen Linse 46 und Streifen 13 befindet sich noch eine Maske 47 mit einer linienförmigen Ausnehmung 47b (entsprechend den Trennlinien 13b) und vier Lochlinien (47c) senkrecht dazu (entsprechend Perforationslinien 13c). Die Ausnehmungen 47b und 47c dienen dazu, die von der Linse 46 vorgeformten linienförmigen Laserblitze noch stärker zu konturieren und exakt zu begrenzen. Die Maske 47 ist daher auswechselbar, um die Größen und Abstände der Perforationen 13c variieren zu können.
Die Erfindung erlaubt es, mit den extrem kurzen und sehr leistungsstarken Laserblitzen jeweils eine Trennlinie 13b in dem Streifen 13 während dessen Bewegung zu bilden. Gleichzeitig können auch die Perforationen mit demselben Laserblitz eingebracht werden. Selbstverständlich ist es mit der Erfindung auch möglich, Perforationen 13c ohne Trennlinien 13b in den Streifen 13 einzubringen.

Die Erfindung läßt sich derart variieren, daß der Laser 43 zwei Blitze nacheinander aussendet, von denen einer eine Trennlinie 13b, der andere die Perforationen 13c erzeugt.

Schließlich können auch zwei Laser vorgesehen werden, von denen der eine nur Blitze zum Bilden von Trennlinien 13b, der andere nur Blitze zum Bilden von Perforationen 13c aussendet.

Beschränkt man sich auf das Bilden von Trennlinien 13b, dann kann anstelle der dargestellten defraktiv fokussierenden Linse 46 eine einfachere Zylinderlinse verwendet werden.

Das dargestellte Beispiel zeigt eine Führung des Streifens 13 um eine Trommel 19. Werden völlig gleiche Perforationen 13c gewünscht, so wird die Linse 46 zusätzlich so ausgelegt, daß Verzerrungen zwischen den Trennlinien 13b ausgeglichen werden.

Es ist auch möglich und für manche Anwendungszwecke vorteilhaft, den Streifen 13 im Bereich des Abtrennens von Blättchen und/oder Perforierens in einer Ebene zu führen, etwa mittels eines perforieren Metallbandes, an dem der Streifen 13 und die Blättchen 13a durch Saugluft gehalten werden.

Eine kontinuierliche Vergrößerung oder Verkleinerung der Perforationen kann man ohne Auswechseln der Maske und ohne Unterbrechung des Betriebes dadurch erreichen, daß vorzugsweise rechteckförmige Perforationen auf zwei Teilmasken aufgebracht werden und übereinanderliegen. Durch Verschieben einer Teilmaske relativ zu der anderen läßt sich die wirksame Überdeckung verkleinern oder vergrößern und dadurch die Größe des 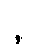 Strahlungsfensters" beeinflussen.

## Patentansprüche

1. Verfahren zum Bearbeiten eines Streifens, von dem Abschnitte zum Verbinden von Zigaretten und Filterstopfen mittels Laserstrahlen abgetrennt werden, dadurch gekennzeichnet, daß die Abschnitte mittels kurzzeitiger Laserblitze von dem Streifen abgetrennt werden.

2. Verfahren nach Anspruch 1, dadurch gekennzeichnet, daß die Abschnitte jeweils mittels nur eines Laserblitzes abgetrennt werden.

3. Verfahren nach Anspruch 1 und/oder 2, dadurch gekennzeichnet, daß die Abschnitte von einem bewegten Streifen abgetrennt werden.

4. Verfahren nach einem oder mehreren der vorhergehenden Ansprüche, dadurch gekennzeichnet, daß die Abschnitte von einem beleimten bewegten Streifen abgetrennt werden.

5. Verfahren nach einem oder mehreren der vorhergehenden Ansprüche, dadurch gekennzeichnet, daß der Streifen oder die Abschnitte zum Bilden von Ventilationsperforationen von Laserblitzen perforiert werden.

6. Verfahren, insbesondere nach Anspruch 5, dadurch gekennzeichnet, daß die Perforationen eines Perforationsmusters durch einen Laserblitz gleichzeitig eingebracht werden.

7. Verfahren nach einem oder mehreren der vorhergehenden Ansprüche, dadurch gekennzeichnet, daß eine Trennlinie und Perforationen eines Perforationsmusters mittels eines gemeinsamen Laserblitzes gleichzeitig eingebracht werden.

8. Verfahren nach einem oder mehreren der vorhergehenden Ansprüche 1 bis 6, dadurch gekennzeichnet, daß eine Trennlinie und Perforationen eines Perforationsmusters jeweils mittels eines gesonderten Lasers eingebracht werden.

9. Verfahren nach einem oder mehreren der Ansprüche 1 bis 6, dadurch gekennzeichnet, daß eine Trennlinie und Perforationen eines Perforationsmusters durch einen gemeinsamen Laser nacheinander eingebracht werden.

10. Verfahren nach einem oder mehreren der vorhergehenden Ansprüche, dadurch gekennzeichnet, daß die Trennlinien und/oder die Perforationen durch Lasericht eingebracht werden, das durch eine Blende mit entsprechenden Schlitzen und/oder Perforationen auf den Streifen gelangt.

11. Verfahren nach einem oder mehreren der vorhergehenden Ansprüche, dadurch gekennzeichnet, daß das Laserlicht mittels einer Defraktionslinse auf die Trennlinien und/oder Perforationen konzentriert wird.

12. Anordnung in einer Filteransetzmaschine zum Abtrennen von zum Verbinden von Zigaretten und Filterstopfen von einem Streifen mittels eines Lasers, gekennzeichnet durch einen kurzzeitige Laserblitze abgehenden Laser (42) zum Bilden von Trennlinien (13b).

13. Anordnung nach Anspruch 12, gekennzeichnet durch einen nur einen Laserblitz je Trennlinie (13a) abgebenden Laser (42).

14. Anordnung nach Anspruch 12 und/oder 13, gekennzeichnet durch einen Laser zum Abtrennen von Abschnitten (13a) von bewegten Streifen (13).

15. Anordnung nach Anspruch 14, gekennzeichnet durch einen Laser zum Abtrennen von beleimten Abschnitten (13a) von bewegten Streifen (13).

16. Anordnung nach einem oder mehreren der Ansprüche 12 bis 15, gekennzeichnet durch einen Laser (42) zum Bilden von Ventilationsperforationen (13c) mittels Laserblitzen.

17. Anordnung insbesondere nach Anspruch 16, gekennzeichnet durch einen Laser (42) zum gleichzeitigen Aufbringen der Perforationen eines Perforationsmusters durch einen Laserblitz.

18. Anordnung nach einem oder mehreren der Ansprüche 12 bis 17, gekennzeichnet durch einen Laser zum gleichzeitigen Bilden einer Trennlinie (13b) und von Perforationen (13c) eines Perforationsmusters mittels eines gemeinsamen Laserblitzes.

19. Anordnung nach einem oder mehreren der Ansprüche 12 bis 17, gekennzeichnet durch einen Laser zum Bilden einer Trennlinie mittels eines Laserblitzes und einen weiteren Laser zum Bilden der Perforationen eines Perforationsmusters mittels eines Laserblitzes.

20. Anordnung nach einem oder mehreren der Ansprüche 12 bis 17, gekennzeichnet durch einen Laser zum Bilden einer Trennlinie mittels eines Laserblitzes und der Perforationen eines Perforationsmusters mittels eines weiteren Laserblitzes.

21. Anordnung nach einem oder mehreren der Ansprüche 12 bis 20, gekennzeichnet durch eine Maske (47) mit Lichtdurchlässen (47b, 47c) zwischen Laser (42) und Streifen (13).

22. Anordnung nach Anspruch 21, dadurch gekennzeichnet, daß die Maske zwei Teilmasken aufweist, die mit Perforationen versehen sind, deren Überdeckungsgrad und damit die Größen der leuchtenden Flächen durch eine relative Verschiebung der Teilmasken beeinflußbar sind.

23. Anordnung nach einem oder mehreren der Ansprüche 12 bis 22, gekennzeichnet durch eine Defraktionslinse (46) zum Konzentrieren des Laserlichtes auf die Trennlinien (13b) und/oder Perforationen (13c).
